Europäisches Patentamt

European Patent Office

Office européen des brevets

(19)

(11) Numéro de publication: **0 154 727**
**B1**

(12) **FASCICULE DE BREVET EUROPEEN**

(45) Date de publication du fascicule du brevet: **07.12.88**

(51) Int. Cl.⁴: **B 23 D 15/14** // E02F3/96

(21) Numéro de dépôt: **84200207.3**

(22) Date de dépôt: **16.02.84**

(54) Cisaille broyeuse.

(43) Date de publication de la demande:
**18.09.85 Bulletin 85/38**

(45) Mention de la délivrance du brevet:
**07.12.88 Bulletin 88/49**

(84) Etats contractants désignés:
**AT BE CH DE FR GB IT LI LU NL SE**

(56) Documents cités:
**FR-A-2 442 685**
**GB-A- 312 525**
**GB-A- 707 215**
**GB-A-2 071 053**
**US-A-2 256 779**
**US-A-4 403 431**

(73) Titulaire: **PRESSES ET CISAILLES LEFORT**
**Société Anonyme**
**Chaussée de Fleurus 93**
**B-6200 Charleroi (BE)**

(72) Inventeur: **Lefort, Yvon**
**Chaussée de Fleurus 93**
**B-6200 Charleroi (BE)**

(74) Mandataire: **Donné, Eddy**
**M.F.J.Bockstael Arenbergstraat 13**
**B-2000 Anvers (BE)**

Courier Press, Leamington Spa, England.

EP 0 154 727 B1

## Description

La présente invention concerne une cisaille broyeuse, particulièrement mais non exclusivement destinée à la démolition de bâtiments dits industriels, c'est-à-dire des constructions incorporant, outre de la maçonnerie et du béton, des éléments métalliques tels que poutrelles armatures et similaires. Une felle cisaille est connue de GB—A 312 525.

On a déjà proposé des cisailles, destinées le plus souvent à être montées en bout de flèche de grues ou pelleteuses hydrauliques.

Il y a de plus des cisailles du type dit "crocodile", c'est-à-dire constituées par deux couteaux dont l'un accomplit un mouvement de rotation par rapport à l'autre.

Ces dispositifs connus présentent deux défauts majeurs:

lors de la coupe, les mâchoirs de la cisaille subissent une torsion, due à la réaction de la matière coupée, qui se répercute sur la grue à laquelle est suspendue la cisaille. Vu les puissances nécessairement mises en jeu, ceci se traduit par des sollicitations inacceptables de l'équipement mis en oeuvre, voire par un réel danger d'exploitation.

le rendement de tels dispositifs connus est médiocre. Ceci s'explique par le fait que la force de coupe n'est pas constante mais proportionnelle à un bras de levier résultant, d'une part, de mouvement de rotation relatif entre les deux couteaux de la cisaille et, d'autre part, de la position occupée par la matière à couper entre les deux lames de ciseaux, c'est-à-dire à la distance le séparant de l'axe de rotation. Idéalement donc, la matière à sectionner devrait chaque fois se situer à proximité immédiate dudit axe de rotation. Sur chantier, cela se révèle aléatoire vu les difficultiés de manoeuvre et l'irrégularité de forme fréquente des pièces à couper.

L'objet de la présente invention est de pallier ces défauts. L'objet de l'invention est résolu pour un dispositif selon la préambule de la revendication 1 par les caractéristiques de la partie caractérisante de cette revendication.

De préférence, les couteaux de l'une des mandibules forment un angle constant avec ceux de l'autre.

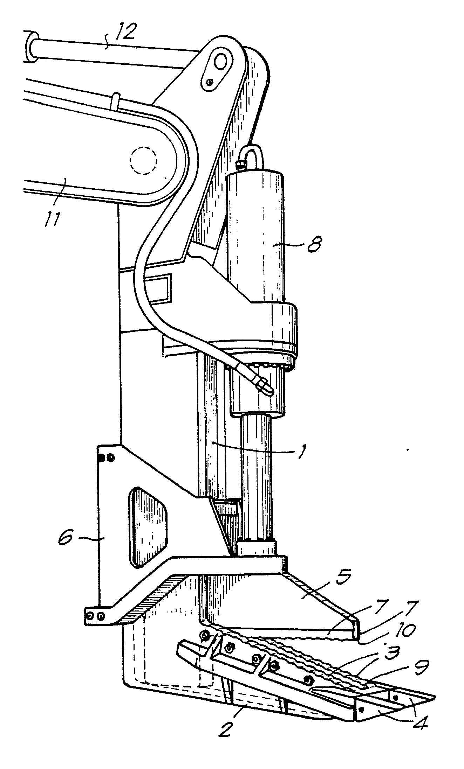

Pour plus de clarté, un exemple non limitatif de réalisation de l'invention est décrit ci-après avec référence au dessin annexé représentant une forme de réalisation de l'invention.

Dans cet exemple, la cisaille-broyeuse est essentiellement constituée par une glissière 1. En une extrémité, cette glissière se termine par un sabot 2 portant deux couteaux parallèles 3, constituant une mandibule "fixe" de la mâchoire de la cisaille. En son extrémité libre, la sabot 2 est prolongé par deux points de pénétration 4.

Dans la glissière 1 peut se déplacer une extrémité d'un mandibule mobile 5, solidaire d'un coulisseau externe 6. Cette mandibule 5 porte également deux coûteaux 7 destinés à pénétrer entre et à coôpérer avec les deux coûteaux 3.

Les déplacements de la mandibule 5 sont commandés par un vérin à deux voies 8, solidaire de la glissière 1.

Les paires de coûteaux 3 et 7 sont reliées chacune par un coûteau orthogonal, respectivement 9 et 10.

Les coûteaux 3 et 7 forment entre-eux un angle, ceci pour assurer une progressivité de coupe similaire à celle obtenue par les cisailles connues du type crocodile. En l'occurence, les coûteaux 7 sont perpendiculaires à l'axe de la glissière 1, tandis que les coûteaux 3 sont inclinés par rapport à ce dernier.

Le dispositif sus-décrit peut être réalisé sous forme d'installation fixe ou déplaçable. Dans ce dernier cas, une solution avantageuse est de le monter à pivotement sur l'extrémité de bras ou flèche 11 d'une grue ou pelleteuse, l'inclinaison du dispositif par rapport à ladite flèche pouvant être commandée par un vérin 12.

On remarquera que la cisaille sus-décrite effectue à chaque fois une double coupe (paires de coûteaux). Ceci n'est en soi pas un avantage réel. Toutefois, le mouvement de translation de la mandibule 5 et son guidage dans la glissière 1 et entre les coûteaux 3 assure une absence totale d'effort de torsion lors de cisaillage, si néfaste en cas de montage de grue que certaíns constructeurs de de ces dernières refusent les cisailles classiques. Il est évident que des modifications peuvent être apportées à l'exemple sus-décrit, sans pour autant sortir du cadre de l'invention selon les revendications.

## Revendications

1. Cisaille broyeuse, du type comprenant deux mandibules (2, 5) dont l'une est mobile et peut s'approcher et s'écarter de l'autre sous l'action d'un vérin hydraulique, et dont l'autre est fixe et solidaire d'une glissière rectiligne (1) dans laquelle se déplace une extrémité de la mandibule mobile (5), par translation et sous l'effet dudit vérin (8), caractérisée en ce que la mandibule fixe (2) comporte deux coûteaux parallèles (3), la mandibule mobile (5) étant guidée par lesdits coûteaux parallèles (3) et comportant également deux coûteaux paraléllles (7) et en ce que la base de la mandibule fixe (2) solidaire de la glissière (1) est réalisée sous forme d'un sabot (2) pourvu, en son extrémité la plus éloignée de ladite glissière (1), de deux pointes de pénetration (4).

2. Cisaille selon la revendication 1, caractérisée en ce que les extrémités des coûteaux (3—7) de chacune des deux mandibules (2) (5), les plus éloignées de ladite glissière (1), sont réunies par un coûteaux (9—10).

3. Cisaille selon la revendication 1, caractérisée en ce que les coûteaux (3—7) des deux mandibules (2) (5) forment entre eux un angle constant.

## Patentansprüche

1. Brechschere des Typs mit zwei Kiefern (2, 5), von denen einer beweglich ist und sich unter der Wirkung eines hydraulischen Hebers dem anderen nähern bzw. sich davon entfernen kann, und wobei dieser andere fest ist und ein integrierender Bestandsteil eines geradlinigen Schlittens (1) ist, in dem sich ein Ende des beweglichen Kiefers (5) durch Translation und durch die Wirkung des Hebers (8) versetzt, dadurch gekennzeichnet, daß der feste Kiefer (2) zwei parallele Messer (3) enthält, wobei der bewegliche Kiefer (5) durch diese parallele Messer (3) geführt wird und zugleich zwei parallele Messer (7) enthält, und daß der Fuß des festen Kiefers (2), der ein integrierender Bestandteil des Schlittens (1) ist, in der Form eines Schuhs (2) ausgeführt ist und am sich am fernsten vom Schlitten (1) befindlichen Ende mit zwei Penetrationspunkten (4) versehen ist.

2. Brechschere nach Anspruch 1, dadurch gekennzeichnet, daß die Enden der Messer (3, 7) eines jeden der zwei sich am fernsten vom Schlitten (1) befindlichen Kiefer (2, 5) durch ein Messer (9, 10) verbunden sind.

3. Brechschere nach Anspruch 1, dadurch gekennzeichnet, daß die Messer (3, 7) beider Kiefer (2, 5) miteinander einen konstanten Winkel bilden.

## Claims

1. Breaking shears of the type comprising two mandibules (2, 5) one of which is mobile and can approach the other or move away from it by the action of a hydraulic jack, the other being fixed and making part of a rectilinear slide (1) wherein one extremity of said mobile mandible (5) is moving by translation and by the action of said jack (8), characterised thereby that said fixed mandible (2) comprises two parallel knives (3), said mobile mandible (5) being guided by said parallel knives (3) and also comprising two parallel knives (7) and that the base of the fixed mandible (2) making part of slide (1) is realized in the form of a shoe (2) which at its extremity being most remote from said slide (1) is provided with two penetration points (4).

2. Breaking shears according to claim 1, characterised thereby that the extremities of the knives (3, 7) of each of both mandibles (2, 5) being most remote from said slide (1) are jointed by a knive (9, 10).

3. Breaking shears according to claim 1, characterised thereby that the knives (3, 7) of both mandibules (2, 5) enclose a constant angle.